Europäisches Patentamt

European Patent Office

Office européen des brevets

(19)

(11) Veröffentlichungsnummer : **0 129 195**
**B1**

(12) # EUROPÄISCHE PATENTSCHRIFT

(45) Veröffentlichungstag der Patentschrift :
23.12.87

(21) Anmeldenummer : 84106734.1

(22) Anmeldetag : 13.06.84

(51) Int. Cl.⁴ : **C 08 G 69/28**

(54) **Verfahren zur kontinuierlichen Herstellung von Polyamiden.**

(30) Priorität : 15.06.83 DE 3321581

(43) Veröffentlichungstag der Anmeldung :
27.12.84 Patentblatt 84/52

(45) Bekanntmachung des Hinweises auf die Patenterteilung : 23.12.87 Patentblatt 87/52

(84) Benannte Vertragsstaaten :
BE CH DE FR GB IT LI NL

(56) Entgegenhaltungen :
DE-A- 1 570 932
DE-A- 2 520 149
US-A- 4 019 866

(73) Patentinhaber : BASF Aktiengesellschaft
Carl-Bosch-Strasse 38
D-6700 Ludwigshafen (DE)

(72) Erfinder : Schmidt, Franz, Dr.
Trommstrasse 3
D-6800 Mannheim 1 (DE)
Erfinder : Pipper, Gunter
Schlangenthaler Weg 10
D-6702 Bad Duerkheim (DE)
Erfinder : Floss, Josef Georg, Dr.
Im Kaestenbusch 2
D-6730 Neustadt (DE)
Erfinder : Zahradnik, Franz, Dr.
Schwedlerstrasse 120
D-6700 Ludwigshafen (DE)

## Beschreibung

Es sind bereits eine Reihe von Verfahren zur Herstellung von Polyamiden aus Salzen aus Dicarbonsäuren und Diaminen z. B. Nylon-6,6-Salz bekannt. In der DE-AS 11 62 562 wird ein Verfahren beschrieben, bei dem man eine wäßrige Lösung von Nylon-6.6-Salz zunächst unter einem Druck von 18 bis 50 atü auf eine Temperatur unterhalb des Siedepunkts erhitzt und die erhitzte Lösung unter die Oberfläche einer Polyamidschmelze leitet und Wasser abtrennt. Nach einem anderen aus der DE-OS 15 70 932 bekannten Verfahren wird die wäßrige Nylon-6,6-Salzlösung zunächst ohne Verdampfen vorgeheizt, in den unteren Teil einer Kolonne geleitet, wasser verdampft und die so erhaltene Salzschmelze in einer nachfolgenden Zone kondensiert. Die hierbei entstehenden Dämpfe werden in der darüber liegenden Kolonne rektifiziert und die mitgeführten Diamine zurückgeleitet. In der DE-OS 24 10 474 wird ein Verfahren beschrieben, bei dem man eine wäßrige Lösung von Nylon-6,6-Salz einer Polyamidschmelze zuführt und das Gemisch in einem wärmetauscher unter Dampfbildung erhitzt und in den unteren Teil einer Kolonne leitet, wobei sich Dampf und Präpolymeres trennen. Das Präpolymere kondensiert im Sumpf der Kolonne und wird zum Teil wieder zurückgeführt. Die Dämpfe werden in der darüber liegenden Kolonne rektifiziert und die darin enthaltenen Diamine zurückgeleitet.

Aus der US-PS 3,948,862 ≙ DE-A-2 520 149 ist ein Verfahren bekannt, bei dem man die Kondensation in einem sich erweiternden Rohr, das durch Ventile in Zonen unterteilt ist, die auch Einbauten enthalten können, durchführt. Es wird kein Hinweis gegeben, wie der Gehalt an Triaminen zu senken ist.

Die nach dem Stand der Technik bekannten Verfahren sind noch verbesserungsbedürftig. Es hat sich herausgestellt, daß die Bildung von Triaminen z. B. Dihexamethylentriamin aus Hexamethylendiamin, einen negativen Einfluß auf die Qualität des Polymeren hat. Durch die Weiterentwicklung der Spinntechnologie werden zunehmend höhere Anforderungen an die Qualität der Polyamide gestellt. Insbesondere sollen Veränderungen der Viskosität bei der Verarbeitung, hervorgerufen durch Triamine, reduziert werden und beim Verspinnen Abrisse und Knötchenbildung vermindert werden. Hierdurch wird auch die Streckausbeute und die Festigkeit der erzeugten Fäden verbessert.

Es war deshalb die technische Aufgabe gestellt, ein kontinuierliches Verfahren zur Herstellung von Polyamiden zur Verfügung zu stellen, bei dem man Polyamide erhält, die bei ihrer Verarbeitung zu Fäden eine Verbesserung hinsichtlich von Abrissen, Knötchenbildung und Streckausbeute sowie Festigkeit der Fäden ermöglichen. Insbesondere war die technische Aufgabe gestellt, die Bildung von Triaminen bei der Polykondensation und das Ausdampfen von Diaminen zu minimieren.

Diese Aufgabe wird gelöst in einem Verfahren zur kontinuierlichen Herstellung von Polyamiden, bei dem man in einer Verdampferzone eine wäßrige Lösung von Salzen aus Dicarbonsäuren mit 6 bis 18 Kohlenstoffatomen und Diaminen mit 6 bis 18 Kohlenstoffatomen unter erhöhtem druck unter gleichzeitiger Verdampfung von Wasser und Bildung eines Präpolymeren auf eine Temperatur von 250 bis 300 °C erhitzt, Präpolymere und Dämpfe kontinuierlich trennt, die Dämpfe rektifiziert und die mitgeführten Diamine zurückleitet, das Präpolymere in eine Polykondensationszone leitet und unter einem Überdruck von 1 bis 10 bar und bei einer Temperatur von 250 bis 300 °C polykondensiert, dadurch gekennzeichnet, daß man die wäßrige Salzlösung unter einem Uberdruck von 1 bis 10 bar innerhalb einer Verweilzeit von weniger als 60 sek erhitzt mit der Maßgabe, daß bei Austritt aus der Verdampferzone der Umsetzungegrad mindestens 93 % beträgt und der Wassergehalt des Präpolymeren höchstens 7 Gew.-% beträgt.

Das neue Verfahren hat den Vorteil, daß die Bildung von Triaminen und das Ausdampfen von Diaminen vermindert wird. Ferner hat das neue Verfahren den Vorteil, daß die Qualität der erzeugten Polyamide verbessert wird und bei der Verarbeitung der Polyamide zu Fäden Abrisse, Knötchenbildung, Streckausbeute sowie Festigkeit verbessert werden.

Erfindungsgemäß verwendet man wäßrige Lösungen von Salzen von Dicarbonsäuren mit 6 bis 18 Kohlenstoffatomen und Diaminen mit 6 bis 18 Kohlenstoffatomen.

Bevorzugt geht man von wäßrigen Lösungen von Salzen aus α,ω-Alkandicarbonsäuren mit 6 bis 12 Kohlenstoffatomen und α,ω-Alkandiaminen mit 6 bis 12 Kohlenstoffatomen, insbesondere solchen mit gerader Kohlenstoffkette, aus. Geeignete Dicarbonsäuren sind beispielsweise Azelainsäure, Adipinsäure, Korksäure, Sebacinsäure, Decandicarbonsäure, Terephthalsäure oder Naphthalindicarbonsäure. Bevorzugte α,ω-Alkandicarbonsäuren haben 6 bis 10 Kohlenstoffatome.

Geeignete Diamine sind beispielsweise Hexamethylendiamin, Octamethylendiamin oder Decamethylendiamin, Bis(4-aminocyclohexyl)-methan, Bis(4-amino-3-methylcyclohexyl)methan, Bis(4-aminocyclohexyl)propan-2,2. Bevorzugte α,ω-Alkandiamine haben 6 bis 10 Kohlenstoffatome.

Besondere Bedeutung haben Nylon-6,9-, -6,10- oder 6,12 Salz, insbesondere Nylon-6,6-Salz erlangt. Die verwendeten wäßrigen Lösungen haben in der Regel einen Gehalt von 30 bis 70 Gew.-%, insbesondere 50 bis 65 Gew.-%. Es versteht sich, daß Dicarbonsäuren und Diamine im wesentlichen in äquivalenten Mengen in den Salzen vorliegen. Zusätzlich ist es auch möglich, Lactame, insbesondere Caprolactam, als Monomeres mitzuverwenden, um ein Mischpolyamid zu erzeugen.

Erfindungsgemäß leitet man die wäßrige Salzlö-

sung vorteilhaft mit einer Temperatur von 50 bis 100 °C kontinuierlich in eine Verdampferzone. Dort wird die wäßrige Salzlösung unter gleichzeitiger Verdampfung von Wasser und Bildung eines Präpolymeren unter einem Überdruck von 1 bis 10 bar auf eine Temperatur von 250 bis 300 °C erhitzt. Vorteilhaft wendet man einen Überdruck von 2 bis 6 bar an und erhitzt auf eine Temperatur von 270 bis 290 °C. Es versteht sich, daß die angewandte Temperatur über dem Schmelzpunkt des jeweils herzustellenden Polymeren liegt.

Ein wesentliches Merkmal der Erfindung ist es, daß man in der verdampferzone eine Verweilzeit von höchstens 60 sek, z. B. 10 bis 55 sek, einhält. Besonders bewährt hat sich eine Verweilzeit von 10 bis 40 sek. Ein weiteres wesentliches Merkmal ist es, daß das entstehende Präpolymere beim Austritt aus der Verdampferzone einen Umsetzungsgrad von mindestens 93 %, insbesondere 95 bis 98 %, aufweist und zudem einen Wassergehalt von höchstens 7 Gew.-%, vorzugsweise 2 bis 5 Gew.-%, hat.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z. B. Füllkörper wie Raschigringe, Metallringe oder insbesondere Füllkörper aus Drahtnetz, bewirken eine große Oberfläche. Hierdurch werden die Phasen, d. h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative viskosität von 1,2 bis 1,7 hat, wird in eine Polymerisationszone geleitet. In der Polymerisationszone wird die anfallende Schmelze bei einer Temperatur von 250 bis 300 °C, insbesondere 270 bis 290 °C, und unter einem Überdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 bis 30 Minuten ein. Das so erhaltene Polyamid, das in der Regel eine relative Viskosität von 1,2 bis 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z. B. von 170 bis 225 °C, bis zur gewünschten Viskosität kondensiert. Vorteilhaft verwendet man hierfür den am Kopf der Kolonne anfallenden Wasserdampf.

Nach einer anderen bevorzugten Arbeitsweise wird die aus der Polykondensationszone schmelzflüssig ausgetragene Polyamidschmelze in eine weitere Polykondensationszone geleitet und dort unter fortlaufender Ausbildung neuer Oberflächen bei einer Temperatur von 270 bis 290 °C vorteilhaft unter vermindertem Druck, z. B. von 1 bis 500 mbar, bis zur gewünschten Viskosität kondensiert. Geeignete Vorrichtungen sind als Finisher bekannt.

Übliche Zusätze wie Mattierungsmittel, z. B. Titandioxid, oder Stabilisatoren können der wäßrigen Salzlösung z. B. als Suspension in Wasser am Eingang der Verdampferzone zugeführt oder in Form von Konzentraten im weiteren Verlauf der Polykondensation zugesetzt werden.

Die nach dem Verfahren der Erfindung hergestellten Polyamide eignen sich zur Herstellung von Fäden und Fasern, Folien und Formkörpern.

Das Verfahren nach der Erfindung sei an folgenden Beispielen veranschaulicht.

Beispiel 1

Eine 62 gew.%ige wäßrige Lösung von Nylon-6,6-Salz wird aus einem beheizten Vorratsbehälter bei ca. 80 °C mit einer Geschwindigkeit entsprechend einer Polyamidmenge von 5 kg/Std mittels einer Dosierpumpe in einen teilweise horizontal, teilweise vertikal angeordneten Röhrenverdampfer befördert. Der Verdampfer ist mit einem flüssigen Wärmeträger, der eine Temperatur von 285 °C hat, bei kräftiger Umwälzung beheizt. Der Verdampfer hat eine Länge von 3 m und einen Inhalt von 180 ml und eine wärmeübertragende Oberfläche von ungefähr 1 300 cm². Die Verweilzeit im Verdampfer beträgt 50 sec. Das aus dem verdampfer austretende Gemisch aus Präpolymeren und Wasserdampf hat eine Temperatur von 280 °C und wird in einem Abscheider in Wasserdampf und Schmelze getrennt. Die Schmelze verweilt im Abscheider noch 10 min und wird dann mittels einer Austragsschnecke mit Ausdampfzone in Form von Strängen ausgetragen, in einem Wasserbad verfestigt und anschließend granuliert. Der Abscheider und die Verdampferzone werden mittels einer Druckhalteeinrichtung, die nach der Kolonne angeordnet ist, unter einem Druck von 5 bar gehalten. Der im Abscheider abgetrennte Wasserdampf wird in eine Füllkörperkolonne mit ca. 10 theoretischen Böden geführt, in die am Kopf ca. 1 Litert/Std. Brüdenkondensat zur Erzeugung von Rücklauf aufgegeben werden. Am Kolonnenkopf stellt sich eine Temperatur von 152 °C ein. Der nach dem Entspannungsventil austretende Wasserdampf wird kondensiert und hat einen Gehalt an Hexamethylendiamin von kleiner 0,05 Gew.-%. Als Kolonnensumpf erhält man eine wäßrige Lösung von Hexamethylendiamin, die 12 bis 15 % Hexamethylendiamin, bezogen auf erzeugtes Polyamid, enthält. Diese Lösung wird über eine Pumpe wieder vor dem Eintritt in den Verdampfer der Ausgangssalzlösung zugegeben.

Nach dem Verdampfer hat das Präpolymere eine relative Viskosität von 1,25, gemessen in 98 gew.-%iger Schwefelsäure bei 20° und weist nach der Endgruppenanalyse einen Umsatz von 93 bis 95 % auf. Der Gehalt an Bis-hexamethylentriamin betrug 0,05 bis 0,1 %, bezogen auf Polyamid.

Nach Austritt der Polymerschmelze aus dem Abscheider hat das Polyamid eine sehr helle Eigenfarbe und einen äußerst niedrigen Gehalt an Bis-hexamethylentriamin von 0,15 % sowie eine relative Viskosität von 1,91 und äquivalente Endgruppen von COOH 109 : $NH_2$ 107. Die Schwankungsbreite der Endgruppen war gering.

Im Austragsextruder wird die Schmelze auf Normaldruck entspannt und bei einer Verweilzeit von kleiner 1 Min praktisch nicht mehr weiter kondensiert. Das erhaltene Granulat wurde durch kontinuierliche Festphasenkondensation mit Oberhitztem Wasserdampf bei 182 °C und einer Verweilzeit von 12 Stunden auf eine Endviskosität von $\eta$-rel = 2,50 kondensiert.

Beispiel 2

Eine 62 gew.-%ige Nylon-6.6-Salzlösung von ca. 80 °C wird von oben in einen vertikal angeordneten Verdampfer von 2 m Länge, einem Inhalt von 120 cm³ und einer wärmeübertragenden Fläche von ungefähr 860 cm² eingeleitet. Der verdampfer wird mit einem kräftig umgewälzten flüssigen Wärmeträger von einer Temperatur von 285 °C beheizt. Das aus dem Verdampfer austretende Gemisch aus Präpolymeren und Wasserdampf hat eine Temperatur von 278 °C. Der Umsetzungsgrad beträgt 94 %. Die Verweilzeit is Verdampfer beträgt ca. 40 sek. Das so erhaltene Gemisch aus Präpolymeren und Wasserdampf wird in eine Stoffaustauschzone geleitet, die mit Füllkörpern bestückt ist und eine Oberfläche von 2 m² hat. Die Stoffaustauschzone ist so ausgebildet, daß keine nennenswerten Wärmeumsätze stattfinden und die Schmelze des Präpolymeren mit dem Wasserdampf innig in Berührung gebracht wird. Die Verweilzeit in der Stoffaustauschzone beträgt 0,5 Min. Nach Passieren der Stoffaustauschzone wird das Gemisch aus Präpolymeren und Dampf analog wie in Beispiel 1 beschrieben im Abscheider getrennt. Der weitere Verfahrensablauf entspricht der Arbeitsweise gemäß Beispiel 1. Das so erhaltene Polyamid hat einen Gehalt an Bis-hexamethylentriamin von 0,15 %. Der Anteil an Hexamethylendiamin im Kolonnensumpf beträgt nur noch 2 bis 3 %, bezogen auf Polyamid.

**Patentansprüche**

1. Verfahren zur kontinuierlichen Herstellung von Polyamiden, bei dem man in einer Verdampferzone eine waßrige Lösung von Salzen aus Dicarbonsäuren mit 6 bis 18 Kohlenstoffatomen und Diaminen mit 6 bis 18 Kohlenstoffatomen unter erhöhtem Druck unter gleichzeitiger Verdampfung von Wasser und Bildung eines Präpolymeren auf eine Temperatur von 250 bis 300 °C erhitzt, Präpolymeres und Dampf kontinuierlich trennt, die Dämpfe rektifiziert und mitgeführte Diamine zurück, leitet, das Präpolymere in eine Polykondensationszone leitet und unter einem Überdruck von 1 bis 10 bar bei einer Temperatur von 250 bis 300 °C kondensiert, dadurch gekennzeichnet, daß man die waßrige bis 300 °C kondensiert, dadurch gekennzeichnet, daß man die wäßrige Salzlösung in der Verdampferzone unter einem Überdruck von 1 bis 10 bar innerhalb einer Verweilzeit von höchstens 60 Sekunden erhitzt mit der Maßgabe, daß bei Austritt aus der Verdampferzone der Umsetzungsgrad mindestens 93 % beträgt und der Wassergehalt des Präpolymeren höchstens 7 Gew.-% beträgt.

2. Verfahren nach Anspruch 1, dadurch gekennzeichnet, daß man in der Verdampferzone eine Verweilzeit von 10 bis 40 Sekunden einhält.

3. Verfahren nach den Ansprüchen 1 und 2, dadurch gekennzeichnet, daß bei Austritt aus der Verdampferzone der Umsetzungsgrad 95 bis 98 % beträgt.

4. Verfahren nach den Ansprüchen 1 bis 3, dadurch gekennzeichnet, daß der Wassergehalt des Präpolymeren 2 bis 5 Gew.-% beträgt.

5. Verfahren nach den Ansprüchen 1 bis 4, dadurch gekennzeichnet, daß man die wäßrige Salzlösung im Verdampfer auf 270 bis 290 °C erhitzt.

6. Verfahren nach den Ansprüchen 1 bis 5, dadurch gekennzeichnet, daß die Verdampferzone alternierend rohrförmig und spaltförmig ausgeführt ist.

7. Verfahren nach den Ansprüchen 1 bis 5, dadurch gekennzeichnet, daß man daß Gemisch aus Präpolymer und Dampf vor der Trennung der Phasen durch eine Stoffaustauschzone, die mit Einbauten versehen ist, leitet.

8. Verfahren nach den Ansprüchen 1 bis 7, dadurch gekennzeichnet, daß man das Polyamid schmelzflüssig aus der Polykondensationszone durch eine Austragszone unter Entfernung von Wasser leitet, granuliert und in fester Phase bis zur gewünschten Viskosität kondensiert.

9. Verfahren nach Anspruch 8, dadurch gekennzeichnet, daß man den am Kopf der Kolonne anfallenden Damp für die Kondensation in fester Phase verwendet.

10. Verfahren nach den Ansprüchen 1 bis 7, dadurch gekennzeichnet, daß man das aus der Polykondensationszone schmelzflüssig ausgetragene Polyamid in einer weiteren Kondensationszone unter fortlaufender Ausbildung neuer Oberfläche bis zur gewünschten Viskosität kondensiert.

## Claims

1. A process for the continuous preparation of a nylon, in which an aqueous solution of a salt of a dicarboxylic acid of 6 to 18 carbon atoms and a diamine of 6 to 18 carbon atoms is heated to 250-300 °C in an evaporator zone under superatmospheric pressure with simultaneous evaporation of water and formation of a prepolymer, the prepolymer and vapor are continuously separated, the vapors are rectified and entrained diamines are recycled, and the prepolymer is passed into a polycondensation zone and condensed under superatmospheric pressure of from 1 to 10 bar and at from 250 to 300 °C, wherein the aqueous salt solution is heated in the evaporator zone under superatmospheric pressure of from 1 to 10 bar in the course of a residence time of not more than 60 seconds, with the proviso that the degree of conversion of the product emerging from the evaporator zone is not less than 93 % and the water content of the prepolymer is not more than 7 % by weight.

2. A process as claimed in claim 1, wherein a residence time of from 10 to 40 seconds is maintained in the evaporator zone.

3. A process as claimed in claims 1 and 2, wherein the degree of conversion of the product emerging from the evaporator zone is from 95 to 98 %.

4. A process as claimed in claim 1 or 2 or 3, wherein the water content of the prepolymer is from 2 to 5 % by weight.

5. A process as claimed in claim 1 or 2 or 3 or 4, wherein the aqueous salt solution is heated to 270-290 °C in the evaporator.

6. A process as claimed in claim 1 or 2 or 3 or 4 or 5, wherein the evaporator zone is alternately tubular and slot-like.

7. A process as claimed in claim 1 or 2 or 3 or 4 or 5, wherein the mixture of prepolymer and vapor is fed through a mass transfer zone provided with baffles, before separation of the phases takes place.

8. A process as claimed in claim 1 or 2 or 3 or 4 or 5 or 6 or 7, wherein the nylon, in the form of a melt, is passed from the polycondensation zone through a discharge zone with removal of water, and is granulated, and then condensed in the solid phase until the desired viscosity is obtained.

9. A process as claimed in claim 8, wherein the vapor obtained at the top of the column is used for the condensation in the solid phase.

10. A process as claimed in claim 1 or 2 or 3 or 4 or 5 or 6 or 7, wherein the nylon discharged in molten form from the polycondensation zone is condensed in a further condensation zone, with continuous formation of new surfaces, until the desired viscosity is obtained.

## Revendications

1. Procédé de préparation en continu de polyamides, selon lequel on chauffe à une température de 250 à 300 °C, sous pression élevée, dans une zone de vaporisation, une solution aqueuse de sels d'acides dicarboxyliques ayant 6 à 18 atomes de carbone et de diamines ayant 6 à 18 atomes de carbone, avec vaporisation simultanée d'eau et formation d'un prépolymère, on sépare en continu le prépolymère et la vapeur, on rectifie les vapeurs et recycle les diamines entraînées, on amène le prépolymère dans une zone de polycondensation et on condense sous une pression différentielle de 1 à 10 bar, à une température de 250 à 300 °C, caractérisé par le fait que l'on chauffe la solution saline aqueuse dans la zone de vaporisation sous une pression différentielle de 1 à 10 bar pendant une durée de séjour d'au maximum 60 secondes, sous réserve qu'à la sortie de la zone de vaporisation le taux de réaction soit d'au moins 93 % et la teneur en eau du prépolymère d'au maximum 7 % en poids.

2. Procédé selon la revendication 1, caractérisé par le fait qu'on maintient, dans la zone de vaporisation, un temps de séjour de 10 à 40 secondes.

3. Procédé selon les revendications 1 et 2, caractérisé par le fait qu'à la sortie de la zone de vaporisation, le taux de réaction est de 95 à 98 %.

4. Procédé selon les revendications 1 à 3, caractérisé par le fait que la teneur en eau du prépolymère est de 2 à 5 % en poids.

5. Procédé selon les revendications 1 à 4, caractérisé par le fait que la solution saline aqueuse est chauffée entre 270 et 290 °C dans un évaporateur.

6. Procédé selon les revendications 1 à 5, caractérisé par le fait que la zone de vaporisation a alternativement une forme tubulaire et une forme de fente.

7. Procédé selon les revendications 1 à 5, caractérisé par le fait que l'on fait traverser au mélange de prépolymère et de vapeur, avant la séparation des phases, une zone d'échange de matières munie de chicanes.

8. Procédé selon les revendications 1 à 7, caractérisé par le fait que l'on fait passer le polyamide fondu, sortant de la zone de polycondensation, par une zone de prise, avec élimination d'eau, on le granule et on le condense en phase solide jusqu'à la viscosité souhaitée.

9. Procédé selon la revendication 8, caractérisé par le fait que l'on utilise, pour la condensation en phase solide, la vapeur produite en tête de colonne.

10. Procédé selon les revendications 1 à 7, caractérisé par le fait que l'on condense, jusqu'à la viscosité souhaitée, le polyamide sortant à l'état fondu de la zone de polycondensation, dans une autre zone de condensation avec formation continue d'une nouvelle surface.